# EUROPEAN PATENT APPLICATION

(11) **EP 4 836 265 A1**
(43) Date of publication of application: **04.11.2026**
(21) Application number: 25315152.6
(22) Date of filing: 30.04.2025
(51) Int. Cl.: H02M 1/15, H02M 3/158

(54) **CHARGING AND DISCHARGING DEVICE FOR A SUPERCONDUCTING MAGNET, USE OF THE CHARGING AND DISCHARGING DEVICE, METHOD OF CHARGING A SUPERCONDUCTING MAGNET AND METHOD OF DISCHARGING A SUPERCONDUCTING MAGNET**

(71) Applicant: Bruker France S.A.S., 67166 Wissembourg Cédex (FR)
(72) Inventor: ILIEV, Joesph, 67160 Rott (FR); SAYAS, Yann, 67110 Reichshoffen (FR)
(74) Representative: Kohler Schmid Möbus Patentanwälte

(57) **Abstract**

A charging and discharging device (10) for a superconducting magnet (12) is disclosed, having at least one circuit block (14), with each circuit block (14) having a first and a second synchronous half bridge converter (16, 18), wherein for each such converter (16, 18) there is allocated a control signal generator (48) for outputting a control signal for driving a switch (20) of the respective converter (16, 18) to open and close and for outputting a further control signal for driving a further switch (22) of this converter (16, 18) to open and close, wherein the control signal applies a duty cycle D₁, D₂ and the further control signal applies an inversion of said duty cycle D₁, D₂, so that the switch (20) is open when the further switch (22) is closed and vice versa, in particular wherein each such converter (16, 18) comprises its own control signal generator (48), wherein in each circuit block (14), the duty cycle D₁ of the control signal of the first converter (16), further referred to as first duty cycle D₁, and the duty cycle D₂ of the control signal of the second converter (18), further referred to as second duty cycle D₂, differ from each other, so that when applying a common input voltage Uᵢₙ between an input point (28) and an base point (32) at both converters (16, 18), a first output voltage Uₒᵤₜ₁ present between a connecting point (40) and a base point (32) of the first converter (16) and a second output voltage Uₒᵤₜ₂ between a connecting point (40) and a base point (32) of the second converter (18) differ from each other, and wherein the first duty cycle D₁ and the second duty cycle D₂ in a case A) both are at most 25%, or in a case B) both are at least 75%. The charging and discharging device is simple and inexpensive in design and to control.

## Description

### Technical field

The present invention refers to a charging and discharging device for a superconducting magnet, a use of the charging and discharging device, a method of charging a superconducting magnet and a method of discharging a superconducting magnet.

### Background

Charging and discharging devices for superconducting magnets are generally known. IEEE Transactions on Power Electronics, pp. 1-1, 2020, "Design Optimization of Two-Quadrant High-Current Low-Voltage Power Supply", E. Coulinge, S. Pittet, and D. Dujic for example discloses a direct current (DC)/DC converter for charging and discharging a superconducting magnet. The DC/DC converter comprises a full-bridge of four metal-oxide-semiconductor field-effect transistors (MOSFETs). The full-bridge comprises a series connection of a first and a second MOSFET connected in parallel to a series connection of a third and a fourth MOSFET. Between a connection point between the first and the second MOSFET and a connection point between the third and the fourth MOSFET a series connection of a resistance, an inductance and a capacitance is connected. The inductance and the capacitance form a low-pass filter. The superconducting magnet is connected to the DC/DC converter in parallel to the capacitance. When a voltage source is connected in parallel to the series connections of the MOSFETS, for a positive voltage output the fourth MOSFET is turned-on constantly and the third MOSFET remains turned-off, while the pair of the first and the second MOSFETs are driven by a complementary pulse width modulated (PWM)-Signal. For a negative voltage output the fourth MOSFET is turned-off, the third MOSFET is turned-on and the pair of first and second MOSFETs are driven by the PWM-Signal.

Because a full-bridge is used, a complicated control logic is required to operate all four MOSFETs simultaneously and to avoid short circuits. This makes control of the full-bridge complex and therefore cost-intensive. Furthermore, a single LC filter in a full-bridge topology must filter a high voltage swing, which requires a large inductance and/or capacitance. This increases the cost of the circuit.

US 11 693 074 B2 discloses an electric circuit arrangement for energizing a superconducting magnet of a magnetic resonance imaging facility. The circuit includes a first circuit part, a second circuit part and a control facility. The first circuit part is designed to generate a direct voltage as a DC link voltage from an alternating voltage and the second circuit part is designed as a current source fed by the DC link voltage. The second circuit part includes a down converter controllable by the control facility, a transformer switchable by the control facility and a rectifier. A primary current is generatable from the DC link voltage via the down converter. The primary current is feedable by a switching facility, switched by the control facility into a primary side of the transformer, and a secondary current for energizing the magnet is generatable via the rectifier connected to a secondary side of the transformer. The down converter is actuated as a function of a measured value of the primary current and of a measured value of the secondary current.

US 5 159 541 discloses an asymmetrical pulse width modulated constant frequency resonant DC/DC converter. The converter comprises bridge chopper means, resonant circuit means and rectifier means. The bridged chopper means serve for converting a DC input to an AC of a constant high frequency. The resonant circuit means are connected to said bridged chopper means and include a series resonant capacitor and a resonant inductor for sending said high frequency AC to high frequency transformer means to generate a transformer secondary AC. The rectifier means are connected to said high frequency transformer means to rectify said transformer secondary AC to produce a stable DC output. Said bridged chopper means include at least two semiconductor switches, each having a snubber capacitor connected thereacross. Said switches are alternately made conducting by respective gating pulse signals applied thereto at said constant high frequency. The duty cycles of said gating pulse signals and thus the duty cycles of the conduction of said switches are complementary with one another. Said duty cycles of said gating pulse signals are further adjustable to maintain said stable DC output.

US 5 245 520 discloses a half bridge asymmetrical buck converter. The converter comprises an input bridge transistor driven at duty cycle D and an additional bridge transistor driven at duty cycle (1-D). The converter further comprises a power transformer, a rectifier and a LC low pass filter.

It is an object of the invention to provide a charging and discharging device that is simple and inexpensive in design and to control. Furthermore, a use of the charging and discharging device, a method for charging a superconducting magnet and a method for discharging the superconducting magnet is to be specified.

This is achieved by a charging and discharging device according to claim 1, a use of the charging and discharging device according to claim 16, a method of charging a superconducting magnet according to claim 17 and a method for discharging a superconducting magnet according to claim 19.

### Disclosure of the invention

In accordance with the invention, it has first been recognized that one buck or step down converter is suitable for charging but not for discharging a superconducting magnet due to its unipolar output voltage. That is why the inventors have turned to a bipolar topology, namely two buck converters. The output of the one buck converter is connected to one pole of the super conducting magnet and the output of the other buck converter is connected to the other pole of the superconducting magnet. The two buck converters have each two controllable switches, a common input voltage and different output voltages due to different duty cycles applied to the buck converters. In the state of the art the one buck converter is operated with a duty cycle symmetrically about 50% (centered) to the duty cycle of the other buck converter.

The inventors have further recognized that operating the two buck converters centered, although the buck converters may be easy to control, the centered operation results in high current ripple through the inductances of the low-pass filters of the buck converters. Thus, the power losses of the inductances are resulting in high heat dissipation by the inductances. Therefore, space-consuming and costly cooling equipment would be necessary for the charging and discharging device. The current ripple $Δ Il = D \left(1-D\right) \frac{{V}_{in}}{{F}_{SW} ⋅ L}$ through an inductance of the respective converter depends on the duty cycle D of this converter, the input voltage Vᵢₙ of this converter, the switching frequency F_{sw} of the switches of this converter and the filter inductance L.

It has further been recognized by the inventors that for reducing the current ripple one has the options to decrease D*(1-D) and/or Vᵢₙ as well as to increase F_{sw} and/or L. However, the inventors chose to optimize D, because for decreasing Vᵢₙ the conductor cross-section of the tracks of the printed circuit board (PCB) would have to be increased and copper is expensive. For increasing the switching frequency F_{sw} more complicated transistors would have to be used, which is expensive, and the losses of the converters will increase. For increasing the filter inductance a bigger coil would have to be used, which is space-consuming and expensive.

Patent claim 1 takes these considerations into account in their entirety.

In accordance with the invention, a charging and discharging device for a superconducting magnet is provided. The device has at least one circuit block, with each circuit block having a first and a second synchronous half bridge converter. Each converter comprises a series connection of a switch and a further switch connected between an input point and a base point, wherein the switch and the further switch are connected at a converging point. Each converter further comprises a series connection of a filter inductance and a filter capacitance. The filter inductance and the filter capacitance are connected at a connecting point. The filter inductance is connected to the converging point, and the filter capacitance is connected to the base point. For each such converter there is allocated a control signal generator for outputting a control signal for driving the switch to open and close and for outputting a further control signal for driving the further switch to open and close. The control signal applies a duty cycle. The further control signal applies an inversion of said duty cycle, so that the switch is open when the further switch is closed and vice versa. In particular, each such converter comprises its own control signal generator. In each circuit block, the duty cycle of the control signal of the first converter, further referred to as first duty cycle D₁, and the duty cycle of the control signal of the second converter, further referred to as second duty cycle D₂, differ from each other. Thus when applying a common input voltage Uᵢₙ between the input point and the base point at both converters, a first output voltage Uₒᵤₜ₁ present between the connecting point and the base point of the first converter and a second output voltage Uₒᵤₜ₂ between the connecting point and the base point of the second converter differ from each other. The first duty cycle D₁ and the second duty cycle D₂ in a case A) both are at most 25%, or in a case B) both are at least 75%.

The switches of the one synchronous half bridge converter may be controlled independently from the switches of the other synchronous half bridge converter. Thus, - compared to the DC/DC converter comprising the full-bridge of four MOSFETS known from the state of the art - a simpler and more flexible control is made possible due to the two independently controlled synchronous half bridge converters. As a result, the charging and discharging device is easier and less expensive to control. Furthermore, the two synchronous half bridge converters have a low pass filter each. Thus, - compared to the DC/DC converter comprising one low pass filter for the entire full-bridge known from the state of the art - the low pass filters of the synchronous half bridge converters have to filter a lower voltage swing each. Therefore, the inductance and/or the capacitance can be smaller. As a result, the charging and discharging device is inexpensive to produce.

Because of the fact that the first duty cycle D₁ and the second duty cycle D₂ in a case A) both are at most 25%, or in a case B) both are at least 75%, the ripple currents through each filter inductance is low. This improves ElectroMagnetic Compatibility (EMC) of the charging and discharging device. Due to the low ripple current the respective filter inductance has low power losses. Compared to an operation with duty cycles in the area of 40% to 60% the losses are reduced by around 22%. Because of the low power losses the heat dissipation from the filter inductances is low. Therefore, the cooling equipment can be reduced or dispensed with completely. In the latter case, one step for the application of the heat-conducting paste is eliminated during production of the charging and discharging device. Moreover, without cooling equipment the charging and discharging device is lighter.

In summary according to the invention a charging and discharging device is provided that is space saving and lightweight, while inexpensive in design and easy to control.

Typically, there is a common input stage to which the input point of each converter of each circuit block is connected. Correspondingly, there is typically a common base stage to which the base point of each converter of each circuit block is connected. The common input voltage Uᵢₙ then is present between the common input stage and the common basepoint stage. The common input voltage Uᵢₙ is a constant voltage, e.g. chosen with 12V, or chosen between 6 V and 24 V. Typically, the base point of each converter of each circuit block is connected to ground.

The control signal generator may comprise an analog to PWM signal converter. The analog to PWM signal converter may be an operational amplifier comparator having complementary outputs. An input of the analog to PWM signal converter may be an analog voltage and an output may be pulse width modulated signals.

Each switch and further switch are either on or off. The switch and further switch maybe chosen as a transistor in each case. The transistor may be a MOSFET, in particular an N-channel enhancement-mode MOSFET, preferably Si MOSFET. It is also conceivable that the transistor is a gallium nitride field effect transistor (GaNFET). Each transistor may be driven by a gate driver. A MOSFET integrated circuit (IC) may be provided that has a gate driver MOSFET combination. It is also conceivable to use a GaNFET IC that has a gate driver GaNFET combination.

Each filter inductance and filter capacitance combination forms a low pass filter. This low pass filter serves to filter switching waveforms.

The phase of the second duty cycle of the second synchronous half bridge converter may be shifted, in particular about 180 degrees, compared to the phase of the first duty cycle of the first synchronous half bridge converter. This reduces the ripples in the input and/or output ripple voltage.

The first and the second synchronous half bridge converter may be put together in the same PCB.

The inventive charging and discharging device constitutes an asymmetric four quadrants (bidirectional) high current converter. The first and second converter are controlled in a non-centered way, wherein the mean of D1 and D2 is substantially different from 50%, namely below 25% (case A) or above 75% (case B). The device is suitable for charging and discharging, simply by choosing D1 and D2 appropriately, in particular with a suitable sign of their difference. The charging or discharging speed can be set by choosing the absolute value of the difference of D1 and D2. Note that the difference of D1 and D2 may be changed dynamically, to adapt charging and discharging speeds, and at the same time, the mean of D1 and D2 may be adapted dynamically, too ("dynamic common mode"), in particular such that a minimization of losses is achieved (by keeping the mean of D1 and D2 away from 50%, as much as possible), and charging and discharging can be performed in a particularly safe way. The inventive device does not require a transformer, but can be designed based on non-isolated step down converters.

### Preferred embodiments of the invention

In a particular embodiment a first transition point is provided, to which the connection point of each first converter of each circuit block is connected directly or indirectly, and a second transition point is provided, to which the connecting point of each second converter of each circuit block is connected directly or indirectly, wherein a first load point is provided for connecting a first end of the super-conducting magnet, and a second load point is provided for connecting a second end of the superconducting magnet, and wherein the first transition point is connected to the first load point via a first loading connection, and the second transition point is connected to the second load point via a second loading connection. This design makes it particularly easy to parallelize several circuit blocks, in particular to parallelize several first converters and to parallelize several second converters, and connect them together to the superconducting magnet.

In a further particular embodiment the charging and discharging device further comprises a control unit, which provides a first generator control signal for the control signal generator of each first converter of each circuit block, and a second generator control signal for the control signal generator of each second converter of each circuit block. Due to this design, it is particularly easy to control centrally the duty cycles of each first converter and each second converter of each circuit block. The first generator control signal may contain target values for Uₒᵤₜ₁ and the second generator control signal may contain target values for Uₒᵤₜ₂.

In a further particular embodiment a current measurement device is included in the first loading connection or the second loading connection, wherein a signal output of the current measurement device is connected to the control unit with a current measurement line. Due to the current measurement device it is possible to measure the electric current currently running in the superconducting magnet. As a result, the current in the superconducting magnet can be controlled, in particular to prevent a quench, depending on the measured current currently running in the superconducting magnet.

The current measurement device may be formed by a current sense amplifier that is connected with its non-inverting and its inverting input to different points of the first loading connection or the second loading connection. Between these different points, the first loading connection or the second loading connection may form a resistance or a resistance is inserted into the respective connection. An output of the current sense amplifier may be connected to the control unit via the current measurement line.

The part of the respective loading connection between the respective load point and the current measurement device may be formed by a cable. Analogously, an end part of the other loading connection (adjacent to its corresponding loading point) may be formed by a further cable. Each cable length may be 1 to 3 meters. Preferably, the cable length may be 2 meters. Such short cable have a relatively small resistance compared to longer cables. Therefore, the losses due to the cables are low. That the charging and discharging device is positioned that close to the superconducting magnet and in its magnetic field may be possible in particular when all the inductors of the converters of each circuit block are without ferromagnetic cores.

In a further particular embodiment the control unit is configured to provide the generator control signals depending on progress of charging and discharging the superconducting magnet, wherein the progress of charging and discharging the superconducting magnet is monitored by the current measuring device. This design makes it possible to control the processes of charging and discharging depending on the monitored current currently running through the superconducting magnet. This further supports the prevention of a quench.

In a further particular embodiment a first potential measurement line connects the first load point with the control unit, and a second potential measurement line connects the second load point with the control unit. Due to this design the voltage currently applied to the superconducting magnet can be measured. As a result, the measured voltage can be used to control the voltage applied to the magnet, in particular to limit the voltage applied to the magnet, to prevent a quench.

In a further particular embodiment the control unit has a first setting input for setting a maximum magnet voltage to be applied to the superconducting magnet and a second setting input for setting a current target of the superconducting magnet, wherein the control unit is configured to generate the first generator control signal and the second generator control signal taking into account the set current target, the set maximum magnet voltage, a signal from the current measurement line indicating the electric current currently running in the superconducting magnet, and signals from the first potential measurement line and the second potential measurement line indicating the voltage currently applied at the superconducting magnet. Due to this design the current running through the superconducting magnet can be controlled depending on a current target and the measured current currently running through the superconducting magnet and the voltage applied to the magnet can be controlled by a maximum magnet voltage setting and the measured voltage currently applied to the magnet. Quenching can be effectively prevented by regulating the current and limiting the voltage during charging and discharging.

In a further particular embodiment a common mode value CM is defined with CM=(Uₒᵤₜ₁+Uₒᵤₜ₂)/2, wherein the control unit is configured to provide the first generator control signal and the second generator control signal such that during charging and discharging the superconducting magnet with the charging and discharging device, the common mode value CM changes over time. By changing the common mode value CM, it is possible to balance the charging or discharging speed on the one hand, and the losses on the other hand, for an optimized overall charging or discharging procedure.

In a further particular embodiment during charging, the common mode value CM is reduced over time in case A), or is increased over time in case B), in particular depending on a measured progress of charging, and/or during discharging, the common mode value CM is increased over time in case A), or is reduced over time in case B), in particular depending on a measured progress of discharging. Due to this, during charging the losses of the filter inductances are further dynamically lowered, or during discharging, the discharging speed may be dynamically increased. In general the control of the switches of the converters (or the D₁ and D₂ values, respectively) takes places dynamically in an area where the losses of the filter inductance are as low as possible.

In a further particular embodiment a differential mode value DM is defined with DM=Uₒᵤₜ₁-Uₒᵤₜ₂, wherein the control unit is configured to provide the first generator control signal and the second generator control signal such that during charging and discharging the superconducting magnet with the charging and discharging device, the differential mode value DM changes over time.

In a further particular embodiment during charging, the absolute value of the differential mode value |DM| is reduced over time, in particular depending on a measured progress of charging, and/or during discharging, the absolute value of the differential mode value |DM| is increased over time, in particular depending on a measured progress of discharging. This makes it possible that during charging the losses of the filter inductances are further dynamically lowered, wherein in addition a quench is prevented. Charging and discharging speed may be optimized, and in particular increased when a quench is less likely or decreased when a quench is more likely.

In a further particular embodiment a differential mode value DM is defined with DM=Uₒᵤₜ₁-Uₒᵤₜ₂, wherein the control unit is configured to provide the first generator control signal and the second generator control signal such that during charging and discharging the superconducting magnet with the charging and discharging device, with respect to the absolute value of the differential mode value |DM| there applies |DM|≤0.25*|Uᵢₙ|, preferably |DM| ≤0.20*|Uᵢₙ|. This allows in practice a good charging and discharging speed while keeping the magnet safe. Uᵢₙ is typically chosen to be positive.

In a further particular embodiment the charging and discharging device comprises a plurality of circuit blocks, wherein all input points of all converters of all circuit blocks are connected to a common input stage, and all base points of all converters of all circuit blocks are connected to a common base stage. This makes the voltage supply of all circuit blocks particularly easy. Furthermore, by providing several circuit blocks the power to be transmitted can be distributed over the several circuit blocks. Therefore, a single converter can be made from less powerful components and thus be inexpensive.

In case of multiple circuit blocks, one control signal generator may be used for multiple first converters and/or one control signal generator may be used for multiple second converters. In this case, one control signal generator may apply the same phase in the duty cycle in all first converters and/or one control signal generator may apply the same phase in the inversed duty cycle in all second converters. However, preferably, each converter has its own control signal generator, which can be considered as part of the converter. So local feedback loops in each converter may be established and/or local phase shifts, in particular for each block, may be applied.

Typically, the control signals applying their respective duty cycles of the different circuit blocks are phase shifted towards each other by 2π/N, with N: number of circuit blocks. The phase shift technique for several first and second converters used in parallel helps to increase the ripple frequency and makes rippling less pronounced, therefore less passives components are needed for filtering. For N half bridges in parallel, the recombined ripple frequency is generally Fᵣᵢₚₚₗₑ = N * F_{sw}.

In a further particular embodiment each such converter comprises its own control signal generator, wherein each converter comprises a feedback line connected to the connecting point and the control signal generator, and the control signal generator is configured to determine the duty cycle of its control signal taking into account a feedback signal received via the feedback line. This enables decoupling of each first converter from the other first converters of several blocks connected together, and decoupling of each second converter from the other second converters of several blocks connected together, applying a current parallelization without directly measuring the current. This makes each converter less expensive, because current measurement for high current is expensive.

Each control signal generator may comprise an operational amplifier, in particular interconnected as PI-controller. At the output of the operational amplifier may be present the analogous voltage signal for the analog to PWM signal converter of the respective control signal generator. The output of the operational amplifier may be fed back to its inverting input via a feedback connection, in which a capacitance and a resistance are arranged. The capacitance may be directly connected to the output of the operational amplifier and the resistance may be directly connected to the inverting input of the operational amplifier. With its one end also connected to inverting input of the operational amplifier may be the feedback line that is connected with its other end to the connecting point of the respective converter and in that a resistance is arranged.

In a further particular embodiment each converter comprises an input capacitance connected to the input point and the base point. The input capacitance serves as current reserve buffer, stores the DC energy and provides the AC current, which is present between the input capacitance and the filter capacitance or decoupling capacitance.

In a further particular embodiment each converter further comprises a series connection of a decoupling inductance and a decoupling capacitance, wherein the decoupling inductance and the decoupling capacitance are connected at a further connecting point, and wherein the decoupling inductance is connected to the connecting point, and the decoupling capacitance is connected to the base point, in particular wherein the further connecting point of each first converter of each circuit block is connected to a first transition point and the further connecting point of each second converter of each circuit block is connected to a second transition point. Each combination of the decoupling inductance and the decoupling capacitance may form a low pass filter that decouples high currents. The decoupling inductance of each first converter allows simple paralleling of first converters by impedance series decoupling. The decoupling inductance of each second converter allows simple paralleling of second converters by impedance series decoupling. Each decoupling inductance acts as a sort of balancing resistor when first and second converters are paralleled. This enables decoupling of each first converter from the other first converters of several blocks connected together, and decoupling of each second converter from the other second converters of several blocks connected together.

The invention also refers to a use of the charging and discharging device for charging or discharging a superconducting magnet. The common input voltage Uin is supplied between the input point and the base point of each converter of each circuit block, such that the first output voltage Uₒᵤₜ₁ is generated between the connecting point and the base point of each first converter of each circuit block, and the second output voltage Uₒᵤₜ₂ is generated between the connecting point and the base point of each second converter block. The superconducting magnet is connected to the charging and discharging device such that a difference of the voltages Uₒᵤₜ₁ and Uₒᵤₜ₂ effectively charges the superconducting magnet. In particular the charging and discharging device is configured such that a first transition point is provided, to which the connection point of each first converter of each circuit block is connected directly or indirectly, and a second transition point is provided, to which the connecting point of each second converter of each circuit block is connected directly or indirectly, that a first load point is provided for connecting a first end of the superconducting magnet, and a second load point is provided for connecting a second end of the superconducting magnet, and that the first transition point is connected to the first load point via a first loading connection, and the second transition point is connected to the second load point via a second loading connection, and that the superconducting magnet is connected between the first load point and the second load point.

Because the charging and discharging device operates with the first duty cycle D₁ and the second duty cycle D₂ in case A) both are at most 25%, or in case B) both are at least 75%, the ripple current through the impedances of the converters are low, so that the power losses of the impedances are also low. Thus, the heat emission by the impedances is low. Because of this the cooling equipment of the charging and discharging device can be reduced or omitted. This makes the charging and discharging device less space-consuming and inexpensive.

The invention also refers to a method of charging a superconducting magnet, in particular using the charging and discharging device, comprising:
- Generating from a common input voltage Uᵢₙ a first output voltage Uₒᵤₜ₁ with at least one first synchronous half bridge converter, wherein a first duty cycle D₁ is applied,
- Generating from said common input voltage Uᵢₙ a second output voltage Uₒᵤₜ₂ with at least one second synchronous half bridge converter, wherein a second duty cycle D₂ is applied,
- Choosing D₁ and D₂ differently, such that Uₒᵤₜ₁ and Uₒᵤₜ₂ are different from each other,
- Choosing D₁ and D₂ in a case A) with D₁ and D₂ both at most 25% or in a case B) with D₁ and D₂ both at least 75%,
- Applying Uₒᵤₜ₁ and Uₒᵤₜ₂ to the superconducting magnet such that the superconducting magnet is effectively charged by a difference of Uₒᵤₜ₁ and Uₒᵤₜ₂, in particular wherein Uₒᵤₜ₁ and Uₒᵤₜ₂ are applied to different ends of the superconducting magnet.

As a result of choosing D₁ and D₂ in case A) with D₁ and D₂ both at most 25% or in case B) with D₁ and D₂ both at least 75%, the ripple current through the impedances of the converters is low. Because of that, the heat release by these impedances is low, which is why cooling elements of the charging and discharging device can be minimized or omitted. This ensures that the charging and discharging device is space-saving and inexpensive.

In a particular variant a common mode value CM is defined with CM=(Uₒᵤₜ₁+Uₒᵤₜ₂)/2, wherein during charging the superconducting magnet, the common mode value CM is changed over time, in particular wherein the common mode value CM is reduced over time in case A), or is increased over time in case B), in particular depending on a measured progress of charging. Due to this design the losses of the filter inductances may be dynamically further lowered during charging. The difference of Uₒᵤₜ₁ and Uₒᵤₜ₂ in the charging situation is positive.

The invention also refers to a method of discharging a superconducting magnet, in particular using the charging and discharging device, comprising:
- Generating from a common input voltage Uᵢₙ a first output voltage Uₒᵤₜ₁ with at least one first synchronous half bridge converter, wherein a first duty cycle D₁ is applied,
- Generating from said common input voltage Uᵢₙ a second output voltage Uₒᵤₜ₂ with at least one second synchronous half bridge converter, wherein a second duty cycle D₂ is applied,
- Choosing D₁ and D₂ differently, such that Uₒᵤₜ₁ and Uₒᵤₜ₂ are different from each other,
- Choosing D₁ and D₂ in a case A) with D₁ and D₂ both at most 25% or in a case B) with D₁ and D₂ both at least 75%,
- Applying Uₒᵤₜ₁ and Uₒᵤₜ₂ to the superconducting magnet such that the superconducting magnet is effectively discharged by a difference of Uₒᵤₜ₁ and Uₒᵤₜ₂, in particular wherein Uₒᵤₜ₁ and Uₒᵤₜ₂ are applied to different ends of the superconducting magnet.

Due to choosing D₁ and D₂ in case A) with D₁ and D₂ both at most 25% or in case B) with D₁ and D₂ both at least 75%, the ripple current through the filter inductances of the converters is relatively low, such that the power losses of said filter inductances are relatively low. Based on this the cooling equipment of the converters can be minimized or omitted, so that the charging and discharging device is space-saving and inexpensive.

In a particular embodiment a common mode value CM is defined with CM=(Uₒᵤₜ₁+Uₒᵤₜ₂)/2, wherein during discharging the superconducting magnet, the common mode value CM is changed over time, in particular the common mode value CM is increased over time in case A), or is reduced over time in case B), in particular depending on a measured progress of discharging. Discharging may be performed with low losses at a good discharging speed with safe magnet operation. The difference of Uₒᵤₜ₁ and Uₒᵤₜ₂ in the discharging situation is negative.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a circuit diagram of an exemplary embodiment of a charging and discharging device according to the invention;
- Fig. 2: shows, enlarged, the left part of the circuit diagram of Fig. 1;
- Fig. 3: shows, enlarged, the right part of the circuit diagram of Fig. 1;
- Fig. 4: shows, enlarged and in a different presentation, the area of Fig. 3 designated with X;
- Fig. 5a: shows input signals and a non-inverted output signal of an analog to PWM converter of a first synchronous half bridge converter of the charging and discharging device, plotted in a coordinate system with the time on the x-axis and the voltage on the y-axis;
- Fig. 5b: shows input signals and a non-inverted output signal of an analog to PWM converter of a second synchronous half bridge converter of the charging and discharging device, plotted in a coordinate system with the time on the x-axis and the voltage on the y-axis, wherein the output signal of the analog to PWM converter of the second synchronous half bridge converter is phase shifted in relation to the output signal of the analog to PWM converter of the first synchronous half bridge converter of Fig. 5a;
- Fig. 6: shows a non-inverted output signal of each analog to PWM converter of six parallelized first and six parallelized second synchronous half bridge converters of the charging and discharging device, plotted in a coordinate system with the time on the x-axis and the voltage on the y-axis, wherein the output signals of the analog to PWM converters of the first synchronous half bridge converters are phase shifted towards each other and the output signals of the analog to PWM converters of the second synchronous half bridge converters are phase shifted towards each other;
- Fig. 7a: shows the course of an adjusted maximum and minimum magnet voltage during charging and discharging the superconducting magnet with the charging and discharging device, plotted in a coordinate system with the time on the x-axis and the voltage on the y-axis;
- Fig. 7b: shows the courses of the voltage present at one end of the superconducting magnet and of the voltage present at another end of the superconducting magnet during charging and discharging the superconducting magnet with the charging and discharging device, plotted in a coordinate system with the time on the x-axis and the voltage on the y-axis;
- Fig. 7c: shows the course of a common mode value (mean value of the voltage present at the one end of the superconducting magnet and of the voltage present at the other end of the superconducting magnet) during charging and discharging the superconducting magnet with the charging and discharging device, plotted in a coordinate system with the time on the x-axis and the voltage on the y-axis; and
- Fig. 7d: shows the courses of the current running through the superconducting magnet and of the voltage (differential mode value) applied to the superconducting magnet during charging and discharging the superconducting magnet with the charging and discharging device, plotted in a coordinate system with the time on the x-axis, the current on the left side of the plot (y-axis) and the voltage on the right side of the plot (y-axis).

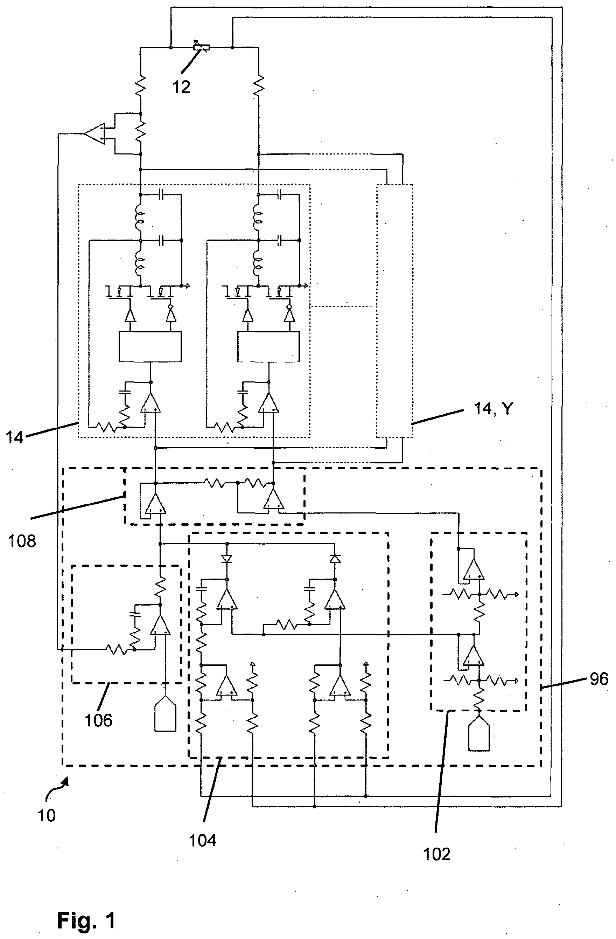

Fig. 1 to 4 show a circuit diagram of an exemplary embodiment of a charging and discharging device 10 according to the invention. The charging and discharging device 10 serves for charging and discharging a superconducting magnet 12.

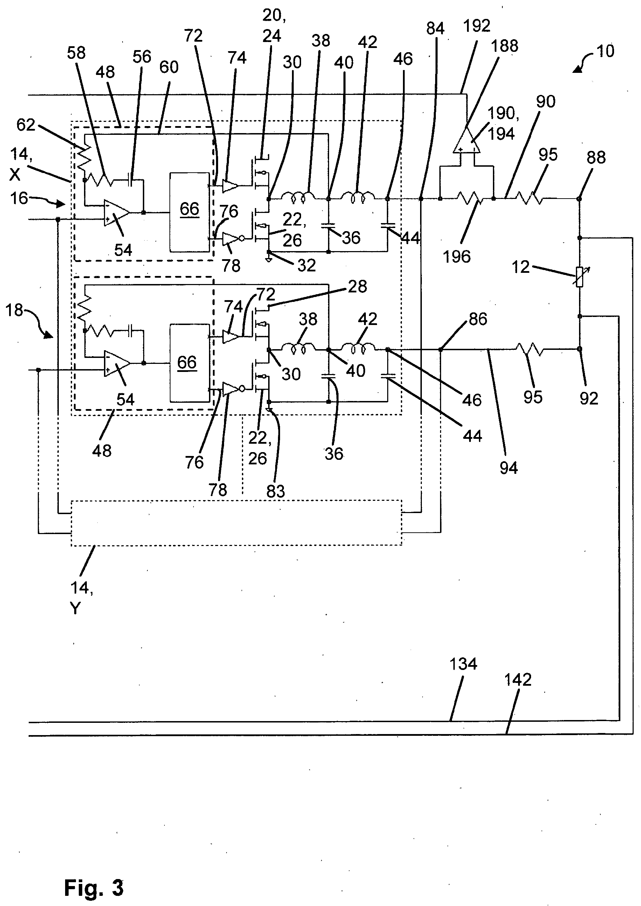

The charging and discharging device 10 as shown has two circuit blocks 14 here; note that in general, a charging and discharging device 10 according to the invention has at least one circuit block 14. Each circuit block 14 has a first synchronous half bridge converter 16 (Fig. 3) and a second synchronous half bridge converter 18.

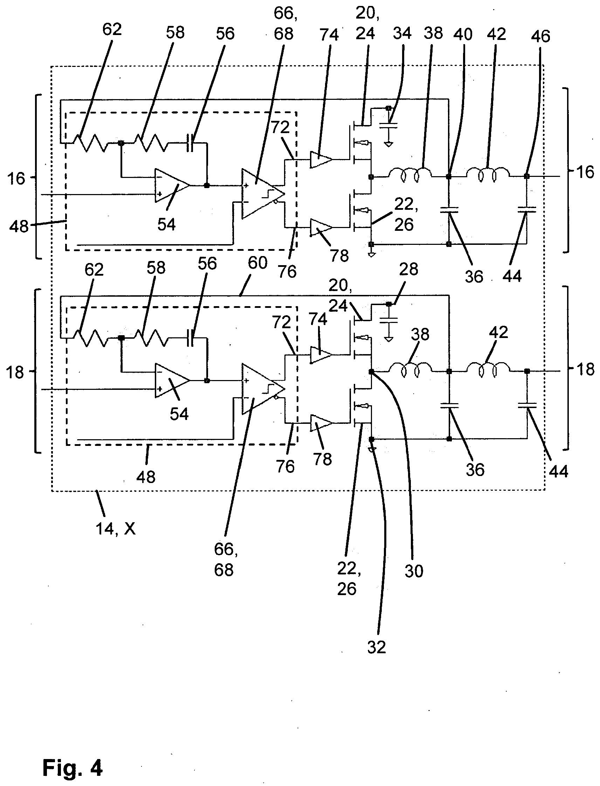

Each synchronous half bridge converter 16, 18 comprises a series connection of a switch 20 and a further switch 22. Here, the switch 20 is formed as a transistor in form of a MOSFET 24 and the further switch 22 is formed as a further transistor in form of a further MOSFET 26. Each MOSFET 24, 26 is at a point of time either closed or opened. A drain connection of the MOSFET 24 is connected to an input point 28. A source connection of the MOSFET 24 is connected to a drain connection of the further MOSFET 26 at a converging point 30. A source connection of the further MOSFET 24 is connected to a base point 32. Between the input point 28 and the base point 32 an input capacitance 34 (Fig. 4) is arranged. The input capacitance 34 serves as current reserve buffer, stores the DC energy and provides the AC current, which is present between the input capacitance 34 and a filter capacitance 36.

Additionally, each synchronous half bridge converter 16, 18 has a series connection of a filter inductance 38 and the filter capacitance 36. With its one end the filter inductance 38 is connected to the converging point 30 (Fig. 3) and with its other end the filter inductance 38 is connected to the one end of the filter capacitance 36 at a connecting point 40. Between the connecting point 40 and the base point 32 of every first converter 16 a first output voltage Uₒᵤₜ₁ is present. Between the connecting point 40 and the base point 32 of every second converter 18 a second output voltage Uₒᵤₜ₂ is present. The other end of the filter capacitance 36 is connected to the base point 32. The combination of the filter inductance 38 and the filter capacitance 36 forms a low pass filter, which serves to filter switching waveforms.

If there are at least two circuit blocks 14 like it is the case in Fig. 1, 3 (the second and further circuit blocks are designated with Y), each synchronous half bridge converter 16, 18 further comprises a series connection of a decoupling inductance 42 and a decoupling capacitance 44. With its one end the decoupling inductance 42 is connected to the connecting point 40 and with its other end the decoupling inductance 42 is connected to the one end of the decoupling capacitance 44 at a further connecting point 46. The other end of the decoupling capacitance 44 is connected to the base point 32. The combination of the decoupling inductance 42 and the decoupling capacitance 44 forms a further low pass filter, which decouples high currents. The decoupling inductance 42 of each first converter 16 allows simple paralleling of first converters 16 by impedance series decoupling. The decoupling inductance 42 of each second converter 18 allows simple paralleling of second converters 18 by impedance series decoupling. Each decoupling inductance 42 acts as a sort of balancing resistor when first converters 16 and second converters 18 are paralleled. This makes it possible to decouple first converters 16 from first converters 16 and second converters 18 from second converters 18 of several circuit blocks 14 connected together.

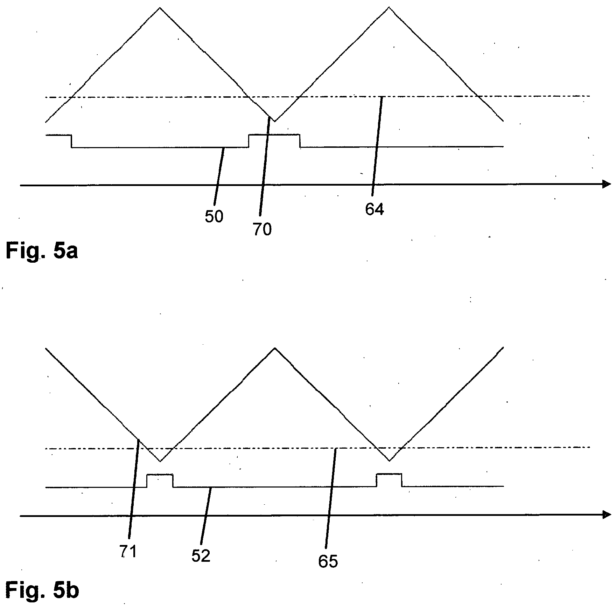

Moreover, each synchronous half bridge converter 16, 18 comprises a control signal generator 48 (Fig. 3). Each control signal generator 48 is configured to output a control signal 50 (Fig. 5a) for driving the switch 20 to open and close and for outputting a further control signal (not shown) for driving the further switch 22 to open and close.

Here, each control signal generator 48 has a first operational amplifier 54, in particular interconnected as PI-controller. The output of the first operational amplifier 54 is fed back to its inverting input via a feedback connection in which a first capacitance 56 and a first resistance 58 are arranged. The first capacitance 56 is directly connected to the output of the first operational amplifier 54 and the first resistance 58 is directly connected to the inverting input of the first operational amplifier 54. With its one end also connected to the inverting input of the first operational amplifier 54 is a feedback line 60 that is connected with its other end to the connecting point 40 and in that a second resistance 62 is provided. The feedback of the output voltage Uₒᵤₜ₁ present between the connecting point 40 and the base point 32 of each first converter 16 as well as the feedback of the output voltage Uₒᵤₜ₂ present between the connecting point 40 and the base point 32 of each second converter 18, to the respective first operational amplifier 54 enables decoupling of first converters 16 from first converters 16 and second converters 18 from second converters 18 of several circuit blocks 14 connected together, due to current parallelization. The first operational amplifier 54 of the first converter 16 outputs an analogous voltage signal 64 (Fig. 5a). The first operational amplifier 54 of the second converter 18 outputs a further analogous voltage signal 65 (Fig. 5b).

Each control signal generator 48 further comprises an analog to PWM signal converter 66. The analog to PWM signal converter 66 is formed as a second operational amplifier 68 in form of a comparator (Fig. 4) having a non-inverting input, an inverting input and two complementary outputs. A non-inverting output of the second operational amplifier 68 is connected to the gate of the MOSFET 24 via a control signal connection 72 in which a gate driver 74 is arranged. An inverting output of the second operational amplifier 68 is connected to the gate of the further MOSFET 26 via a further control signal connection 76 in which a further gate driver 78 is arranged.

The output of the first operational amplifier 54 of the first converter 16 is connected to the non-inverting input of the second operational amplifier 68 of the first converter 16 for transmitting the analogous voltage signal 64 (Fig. 5a). A triwave signal 70 (Fig. 5a) is applied to the inverting input of the second operational amplifier 68 of the first converter 16. The non-inverting output of the second operational amplifier 68 of the first converter 16 outputs the control signal 50 for driving the MOSFET 24 of the first converter 16 to open and close. The inverting output of the second operational amplifier 68 of the first converter 16 outputs the further control signal (not shown) for driving the further MOSFET 26 of the first converter 16 to open and close. The further control signal of the second operational amplifier 68 of the first converter 16 is inverted in relation to the control signal 50 of the second operational amplifier 68 of the first converter 16 such that the control signal 50 applies a duty cycle D₁ and the further control signal applies an inversion of said duty cycle D₁.

The output of the first operational amplifier 54 of the second converter 18 is connected to the non-inverting input of the second operational amplifier 68 of the second converter 18 for transmitting the further analogous voltage signal 65 (Fig. 5b). A further triwave signal 71 is applied to the inverting input of the second operational amplifier 68 of the second converter 18. The non-inverting output of the second operational amplifier 68 of the second converter 18 outputs the control signal 52 for driving the MOSFET 24 of the second converter 18 to open and close. The inverting output of the second operational amplifier 68 of the second converter 18 outputs the further control signal (not shown) for driving the further MOSFET 26 of the second converter 18 to open and close. The further control signal of the second operational amplifier 68 of the second converter 18 is inverted in relation to the control signal 52 of the second operational amplifier 68 of the second converter 18 such that the control signal 52 applies a duty cycle D₂ and the further control signal applies an inversion of said duty cycle D₂.

Because of the inversion, the switch 20 of a respective converter 16, 18 is open when the further switch 22 of this converter 16, 18 is closed and vice versa. To prevent that both switches 20, 22 of a respective converter 16, 18 are closed at the same time adequate dead-times are provided.

The triwave signal 71 of the second converter 18 (Fig. 5b) may be phase shifted to the triwave signal 70 of the first converter 16 (Fig. 5a), in particular by 180 degrees (Fig. 5a, b). When this is the case, the second duty cycle D₂ is phase shifted to the first duty cycle D₁ by corresponding degrees.

The first duty cycle D₁ and the second duty cycle D₂ in a case A) both are at most 25%, or in a case B) both are at least 75%. The first duty cycle D₁ and the second duty cycle D₂ differ from each other. As a result of that, when applying a common input voltage Uᵢₙ between the input point 28 and the base point 32 at both converters 16, 18, the first output voltage Uₒᵤₜ₁ present between the connecting point 40 and the base point 32 of the first converter 16 and the second output voltage Uₒᵤₜ₂ between the connecting point 40 and the base point 32 of the second converter 18, differ from each other. The common input voltage Uᵢₙ is a constant voltage typically between 6 Volt and 24 Volt, in particular 12 Volt. Each base point 32 is connected to ground 83.

If there are at least two circuit blocks 14 like it is the case in Fig. 1, 3, a common input stage (not shown) is provided, to which the input point 28 of each converter 16, 18 of each circuit block 14 is connected. Furthermore, there is a common base point stage (not shown), to which the base point 32 of each converter 16, 18 of each circuit block 14 is connected. The common input voltage Uᵢₙ is present between the common input stage and the common base point stage.

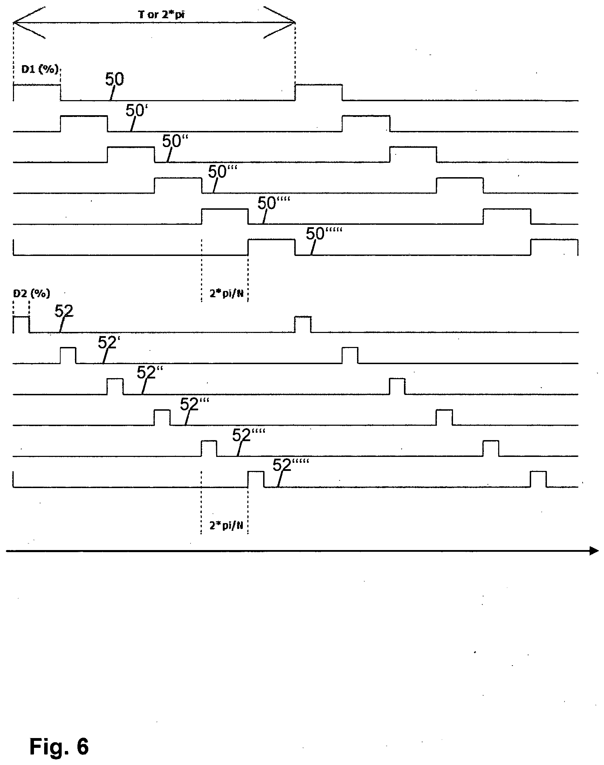

The triwave signals 70 of the first converters 16 of multiple circuit blocks 14 may be phase shifted towards each other by 2π/N degrees, wherein N is the number of circuit blocks 14. When this is the case, the first duty cycles D₁ of the first converters 16 of the circuit blocks 14 may also be phase shifted towards each other by 2π/N degrees. Correspondingly, the triwave signals 71 of the second converters 18 of the circuit blocks 14 may be phase shifted towards each other by 2π/N, so that the second duty cycles D₂ of the second converters 18 of the circuit blocks 14 may also be phase shifted towards each other by 2π/N. Fig. 6 shows the control signals 50, 50', 50", 50‴, 50ʺʺ, 50‴ʺ of the second operational amplifier 68 of the first converter 16 having the first duty cycle D₁ and the control signals 52, 52', 52", 52‴, 52ʺʺ, 52‴ʺ of the second operational amplifier 68 of the second converter 18 having the second duty cycles D₂ of a charging and discharging device 10 having six (N=6) circuit blocks 14. Here the first duty cycles D₁ of the first converters 16 of the circuit blocks 14 are phase shifted to each other by 60 degrees and the second duty cycles D₂ of the second converters 18 of the circuit blocks 14 are phase shifted to each other by 60 degrees.

The further connecting point 46 of each first converter 16 of each circuit block 14 is connected to a first output transition point 84 and the further connecting point 46 of each second converter 18 of each circuit block 14 is connected to a second output transition point 86.

The first output transition point 84 is connected to a first load point 88 via a first loading connection 90, and the second output transition point 86 is connected to a second load point 92 via a second loading connection 94. The end section of the first loading connection 90 being directly connected to the first load point 88 and the further end section of the second loading connection 94 being directly connected to the second load point 92 are each formed as a cable having a resistance 95.

The superconducting magnet 12 is connected with its one end to the first load point 88 and with its other end to the second load point 92. Between the first load point 88 and the base point 32 a voltage U_{out1'} is present. U_{out1'} corresponds essentially to Uₒᵤₜ₁. Between the second load point 92 and the base point 32 a voltage U_{out2'} is present. U_{out2'} corresponds essentially to Uₒᵤₜ₂.

Based on that a differential mode voltage value DM is defined as the voltage U_{out1'} present between the first load point 88 and the base point 32 minus the voltage U_{out2'} present between the second load point 92 and the base point 32. That is DM=U_{out1'} - U_{out2'}. In addition, a common mode voltage value CM is defined as the mean value of the voltage U_{out1'} present between the first load point 88 and the base point 32 as well as the voltage U_{out2'} present between the second load point 92 and the base point 32. That is CM=(U_{out1'}+U_{out2'})/2.

The phase shift technique inside one block is very useful to decrease an input capacitor current and it synchronizes the ripple voltage between U_{out1'} and U_{out2'}. In the voltage across the magnet DM said synchronized ripples are subtracted out in part or completely if U_{out1'} and U_{out2'} are equal. The phase shift technique for several first 16 and second 18 converters in parallel helps to increase the ripple frequency, therefore less passives components are needed for filtering.

Moreover, the charging and discharging device 10 comprises a control unit 96 (Fig. 1). The control unit 96 is configured to output a first generator control signal for the control signal generator 48 (Fig. 3) of each first converter 16 of each circuit block 14 and a second generator control signal for the control signal generator 48 of each second converter 18 of each circuit block 14. The first generator control signal provides target values for the voltage U_{out1'} present between the first load point 88 and the base point 32. The second generator control signal provides target values for the voltage U_{out2'} present between the second load point 92 and the base point 32.

The control unit 96 here comprises four electrical component arrangements 102, 104, 106, 108 (Fig. 1) interconnected with each other.

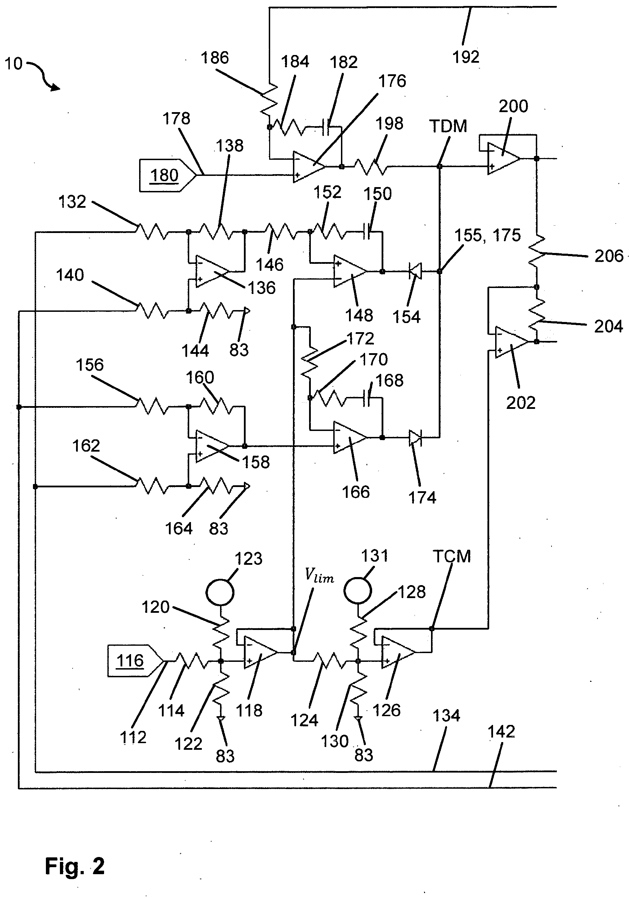

A first electrical component arrangement 102 may be configured for outputting an adjusted (by the first electrical component 102) maximum magnet voltage Vₗᵢₘ (Fig. 2) and/or a target common mode voltage value TCM. The first electrical component arrangement 102 may generate its outputs depending on a maximum magnet voltage 112. The maximum magnet voltage is set and changed by a user of the charging and discharging device 10. It is also conceivable that the maximum magnet voltage is once set initially by a user of the charging and discharging device 10 and from thereon changed automatically by a suitable control device.

The first electrical component arrangement 102 has a third resistance 114 connected with its one end to a first setting input 116 in form of a human machine interface for entry of the maximum magnet voltage 112 set by a user of the charging and discharging device 10. With its other end the third resistance 114 is connected to a non-inverting input of a third operational amplifier 118. The third resistance 114 may serve as offset for the maximum magnet voltage 112, in particular the offset may be about 100 Millivolt. The first electrical component arrangement 102 has a fourth resistance 120 and a fifth resistance 122 connected with their one ends to the non-inverting input of the third operational amplifier 118. The fourth resistance 120 and the fifth resistance 122 together form a voltage divider, which may serve for adjustment of the voltage to the respective analog to PWM converter 66 (Fig. 3). The fourth resistance 120 is connected with its other end to a voltage source 123, where may be about 2,5 volt are present. The fifth resistance 122 is connected with its other end to ground 83. The third operational amplifier 118 may be interconnected as a voltage follower. The output of the third operational amplifier 118 is fed back to its inverting input. At the output of the third operational amplifier 118 may be present a maximum magnet voltage Vₗᵢₘ adjusted by the first electrical component 102.

The first electrical component arrangement 102 has a sixth resistance 124 connected with its one end to the output of the third operational amplifier 118 and with its other end to the non-inverting input of a fourth operational amplifier 126. The sixth resistance 124 may create a further voltage offset. The first electrical component arrangement 102 has a seventh resistance 128 and an eighth resistance 130 connected with their one ends to the non-inverting input of the fourth operational amplifier 126. The seventh resistance 128 and the eighth resistance 130 may form together a further voltage divider. The seventh resistance 128 is connected with its other end to a further voltage source 131, where about 2,5 volt may be present. The eighth resistance 130 is connected with its other end to ground. The fourth operational amplifier 126 may be interconnected as a voltage follower. The output of the fourth operational amplifier 126 is fed back to its inverting input. At the output of the fourth operational amplifier 126 may be present the target common mode value TCM. The sixth resistance 124 to eighth resistance 130 and the fourth operational amplifier 126 together form the restriction that TCM>(adjusted maximum magnet voltage Vₗᵢₘ)/2.

A second electrical component arrangement 104 (Fig. 1) may be configured for either taking in (pulling in) or giving out (pushing out) a current on its output. The second electrical component arrangement 104 may generate its output depending on the adjusted maximum magnet voltage Vₗᵢₘ as well as the voltages U_{out1'}, U_{out2'} present between the first load point 88 and the base point 32 as well as the second load point 92 and the base point 32.

The second electrical component arrangement 104 has a ninth resistance 132 that is connected with its one end to the second load point 92 (Fig. 3) via a second potential measurement line 134 and with its other end to an inverting input of a fifth operational amplifier 136. An output of the fifth operational amplifier 136 is fed back to its inverting input via a feedback connection in which a tenth resistance 138 is arranged. An eleventh resistance 140 is connected with its one end to the first load point 88 via a first potential measurement line 142 and with its other end to a non-inverting input of the fifth operational amplifier 136. A twelfth resistance 144 is connected with its one end to the non-inverting input of the fifth operational amplifier 136 and with its other end to ground 83. The output of the fifth operational amplifier 136 is connected via a thirteenth resistance 146 to a non-inverting input of a sixth operational amplifier 148. The sixth operational amplifier 148 may be interconnected as a PI controller. The output of the sixth operational amplifier 148 is fed back to its non-inverting input via a feedback connection in which a second capacitance 150 and a fourteenth resistance 152 are arranged. The second capacitance 150 is connected directly to the output of the sixth operational amplifier 148 and the fourteenth resistance 152 is connected directly to the non-inverting input of the sixth operational amplifier 148. An inverting input of the sixth operational amplifier 148 is connected to the output of the third operational amplifier 118. To the output of the sixth operational amplifier 148, a first diode 154 is connected with its one end. The forward direction of the first diode 154 is in the direction of the output of the sixth operational amplifier 148.

Because the fifth operational amplifier 136 may have a supply voltage from 0 volt to 5 volt, during charging it has on its output a voltage higher than 0 volt and at highest 5 volt, and during discharging 0 volt. Therefore, the fifth operational amplifier 136 amplifies only positive voltage differences between its inputs, which are only present during charging. The voltage at the output of fifth operational amplifier 136 minus the voltage drop over thirteenth resistance 146 is present at the non-inverting input of the sixth operational amplifier 148, wherein at its inverting input the adjusted maximum magnet voltage Vₗᵢₘ is present as a target value. If during charging the voltage difference at the inputs of the sixth operational amplifier 148 is positive, that means that the target value Vₗᵢₘ is smaller than DM, the voltage present at the output of the sixth operational amplifier 148 is smaller than the voltage at another end 155 of the first diode 154. In this case, a current is pulled through the first diode 154 in the direction of the sixth operational amplifier 148. Due to this design the maximum magnet voltage is limited. In summary, the part of the second electrical component 104 that comprises the ninth resistance 132 to the fourteenth resistance 152, the fifth operational amplifier 136 and the sixth operational amplifier 148 as well as the first diode 154, is only "active" during charging.

The second electrical component arrangement 104 has a fifteenth resistance 156 that is connected with its one end to the first load point 88 via the first potential measurement line 142 and with its other end to an inverting input of a seventh operational amplifier 158. An output of the seventh operational amplifier 158 is fed back to its inverting input via a feedback connection in which a sixteenth resistance 160 is arranged. A seventeenth resistance 162 is connected with its one end to the second load point 92 via the second potential measurement line 134 and with its other end to a non-inverting input of the seventh operational amplifier 158. An eighteenth resistance 164 is connected with its one end to the non-inverting input of the seventh operational amplifier 158 and with its other end to ground 83. The output of the seventh operational amplifier 158 is connected to a non-inverting input of an eighth operational amplifier 166. The eighth operational amplifier 166 may be interconnected as a PI controller. The output of the eighth operational amplifier 166 is fed back to its inverting input via a feedback connection in which a third capacitance 168 and a nineteenth resistance 170 is arranged. The third capacitance 168 is directly connected to the output of the eighth operational amplifier 166 and the nineteenth resistance 170 is directly connected to the inverting input of the eighth operational amplifier 166. A twentieth resistance 172 is connected with its one end to the output of the third operational amplifier 118 and with its other end to the inverting input of the eighth operational amplifier 166. To the output of the eighth operational amplifier 166, a second diode 174 is connected with its one end and with its other end 175 to the other end 155 of the first diode 154. The forward direction of the second diode 174 is in the direction of the first diode 154.

Similar as during charging, if during discharging the negative target value (negative adjusted maximum magnet voltage -Vₗᵢₘ) is higher than DM, the voltage present at the output of the eighth operational amplifier 166 is higher than the voltage at the other end 175 of the second diode 174. In this case, a current is pushed through the second diode 174 in the direction of the first diode 154. Due to this design the minimum magnet voltage is limited. In summary, the part of the second electrical component 104 that comprises the fifteenth resistance 156 to the twentieth resistance 172, the seventh operational amplifier 158 and the eighth operational amplifier 166 as well as the second diode 174, is only "active" during discharging.

A third electrical component arrangement 106 (Fig. 1) may serve for controlling the current currently running through the superconducting magnet 12. By the current control thermal effects may be corrected. The third electrical component arrangement 106 may be configured for outputting a target differential mode value TDM. The third electrical component 106 may generate its output depending on the current currently running through the superconducting magnet 12 and a current target 178. The current target 178 is set and changed by a user of the charging and discharging device 10. It is also conceivable that the current target 178 is set and changed by the suitable control device.

The third electrical component 106 arrangement here comprises a ninth operational amplifier 176. The ninth operational amplifier 176 may be interconnected as a PI controller. To the non-inverting input of the ninth operational amplifier 176 a second setting input 180 in form of a further human machine interface is connected for entry of the current target 178. The output of the ninth operational amplifier 176 is fed back to its inverting input via a feedback connection in which a fourth capacitance 182 and a twenty-first resistance 184 is arranged. The fourth capacitance 182 is directly connected to the output of the ninth operational amplifier 176 and the twenty-first resistance 184 is directly connected to the inverting input of the ninth operational amplifier 176. To the inverting input of the ninth operational amplifier 176 a twenty-second resistance 186 is connected with its one end. With its other end the twenty-second resistance 186 is connected to a signal output 188 (Fig. 3) of a current measurement device 190 via a current measurement line 192.

The current measurement device 190 is connected to the first loading connection 90. The current measurement device 190 comprises a tenth operational amplifier 194 in form of a current sense amplifier that is with its non-inverting input and with its inverting input connected to different points of the first loading connection 90. Between these different points the first loading connection forms a twenty-third resistance 196 or in the first loading connection 90 the twenty-third resistance 196 is arranged.

A twenty-fourth resistance 198 (Fig. 2) is connected with its one end to the output of the ninth operational amplifier 176. At the other end of the twenty-fourth resistance 198 the target differential mode value TDM is present. To the other end of the twenty-fourth resistance 198 the others ends 155, 175 of the first diode 154 and the second diode 174 are connected. The twenty-fourth resistance 198 may serve for isolation and/or have a value of one kiloohm.

If the second electrical component arrangement 104 pulls in a current through the first diode 154 the target differential mode voltage value TDM is decreased. Correspondingly, if the second electrical component arrangement 104 pushes a current out through the second diode 174 the target differential mode voltage value TDM is increased.

A fourth electrical component arrangement 108 (Fig. 1) may serve for single ended to differential signal conversion. The fourth electrical component arrangement 108 may be configured for outputting the first generator control signal and the second generator control signal. The fourth electrical component arrangement 108 may generate its outputs depending on the target differential mode value TDM and the target common mode value TCM.

The fourth electrical component 108 comprises an eleventh operational amplifier 200 (Fig. 2). The eleventh operational amplifier 200 may be interconnected as voltage follower. To the non-inverting input of the eleventh operational amplifier 200 the other ends 155, 175 of the twenty-fourth resistance 198 and the diodes 154, 174 are connected. The output of the eleventh operational amplifier 200 is fed back to its inverting input via a feedback connection. At the output of the eleventh operational amplifier 200 the first generator control signal is present. The first generator control signal may contain target values of the voltage U_{out1'} present between the first load point 88 and the base point 32. The output of the eleventh operational amplifier 200 is connected to the non-inverting input of the first operational amplifier 54 (Fig. 3) of every first converter 16 of each circuit block 14.

The fourth electrical component 108 comprises a twelfth operational amplifier 202. The twelfth operational amplifier 202 may be interconnected as an inverter. To the non-inverting input of the twelfth operational amplifier 202 the output of the fourth operational amplifier 126 is connected. The output of the twelfth operational amplifier 202 is fed back to its inverting input via a feedback connection in which a twenty-fifth resistance 204 is arranged. The inverting input of the twelfth operational amplifier 202 is connected via a twenty-sixth resistance 206 to the output of the eleventh operational amplifier 200. At the output of the twelfth operational amplifier 202 the second generator control signal is present. The second generator control signal may contain target values of the voltage U_{out2'} present between the second load point 92 and the base point 32. The output of the twelfth operational amplifier 202 is connected to the non-inverting input of the first operational amplifier 54 of every second converter 18 of each circuit block 14.

A method for charging the superconducting magnet 12 using the charging and discharging device 10 is provided. Depending on the common input voltage Uᵢₙ the voltage U_{out1'} present between the first load point 88 and the base point 32 is generated by at least one first synchronous half bridge converter 16, to which the first duty cycle D₁ is applied. In the same time depending on the common input voltage Uᵢₙ the voltage U_{out2'} present between the second load point 92 and the base point 32 is generated by at least one second synchronous half bridge converter 18, to which a second duty cycle D₂ is applied. The duty cycles of D₁ and D₂ are chosen differently, such that U_{out1'} and U_{out2'} are different from each other. Furthermore, D₁ and D₂ are chosen in case A) both at most 25% or in case B) both at least 75%. The voltage U_{out1'} present between the first load point 88 and the base point 32, as well as the voltage U_{out2'} present between the second load point 92 and the base point 32, are applied to the superconducting magnet 12 such that the superconducting magnet is effectively charged by a difference of said voltages U_{out1'}, U_{out2'}, namely by the differential mode voltage value DM. The differential mode voltage value DM is positive. During charging the differential mode voltage value DM is reduced over time and/or the common mode voltage value CM is reduced over time in case A) or is increased over time in case B). The voltage U_{out1'} present between the first load point 88 and the base point 32, is applied to one end of the superconducting magnet and the voltage U_{out2'} present between the second load point 92 and the base point 32, is applied to the other end of the superconducting magnet.

In addition, a method for discharging the superconducting magnet 12 using the charging and discharging device 10 is provided. Depending on the common input voltage Uᵢₙ the voltage U_{out1'} present between the first load point 88 and the base point 32, is generated by at least one first synchronous half bridge converter 16, to which a first duty cycle D₁ is applied. In the same time depending on the common input voltage Uᵢₙ the voltage U_{out2'} present between the second load point 92 and the base point 32, is generated by at least one second synchronous half bridge converter 18, to which a second duty cycle D₂ is applied. The duty cycles of D₁ and D₂ are chosen differently, such that U_{out1'} and U_{out2'} are different from each other. Furthermore, D₁ and D₂ are chosen in case A) both at most 25% or in case B) both at least 75%. The voltage U_{out1'} present between the first load point 88 and the base point 32, and the voltage U_{out2'} present between the second load point 92 and the base point 32, are applied to the superconducting magnet 12 such that the superconducting magnet 12 is effectively discharged by a difference of said voltages U_{out1'}, U_{out2'}, namely by the differential mode voltage value DM. The differential mode voltage value DM is negative. During discharging the differential mode voltage value DM is increased over time and/or the common mode value CM is increased over time in case A) or is reduced over time in case B). The voltage U_{out1'} present between the first load point 88 and the base point 32, is applied to one end of the superconducting magnet 12 and the voltage U_{out2'} present between the second load point 88 and the base point 32, is applied to the other end of the superconducting magnet 12.

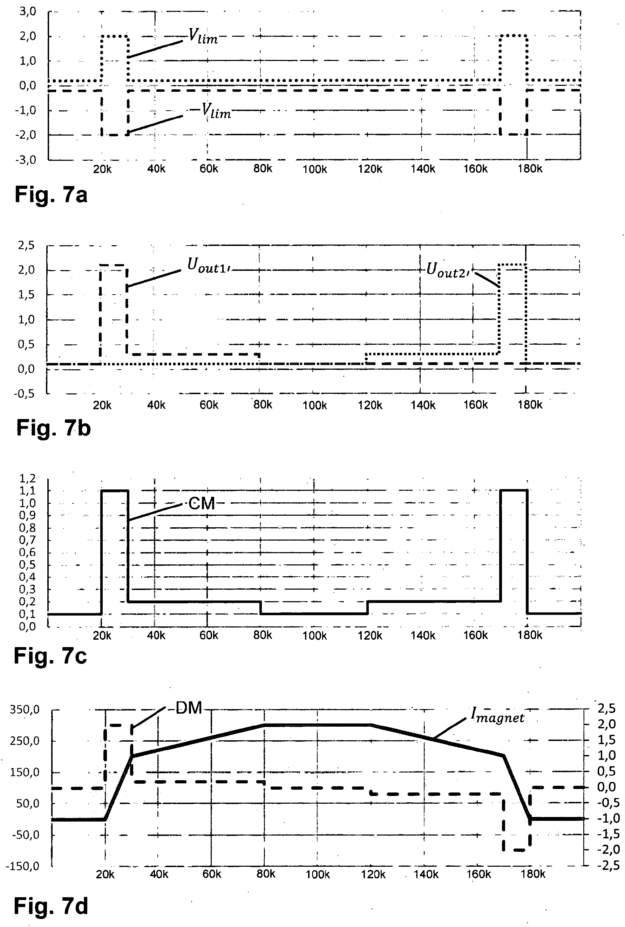

In Fig. 7a to 7d the essential voltages Vₗᵢₘ,-Vₗᵢₘ, U_{out1'}, U_{out2'}, CM and DM in volt as well as the current I_{magnet} through the superconducting magnet 12 in ampere are plotted on the y-axis over the time in seconds on the x-axis during charging and discharging the superconducting magnet 12 in an exemplary variant. For the following plots the first duty cycle D₁ and the second duty cycle D₂ both are at most 25% and the inductance of the superconducting magnet 12 is here 100 Henry. The x-axis division is 20000 seconds. Charging begins at 20000 seconds and ends at 80000 seconds. Discharging begins at 120000 seconds and ends at 180000 seconds. Note that in practice regularly charging and discharging typically will not take place so close one after the other, but is shown here in the same diagrams for simplicity.

In Fig. 7a the minimum magnet voltage -Vₗᵢₘ (dashed line) and the adjusted maximum magnet voltage Vₗᵢₘ (dotted line) (y-axis) are plotted over the time (x-axis). The minimum magnet voltage -Vₗᵢₘ may be the negative adjusted maximum magnet voltage Vₗᵢₘ. The adjusted maximum magnet voltage Vₗᵢₘ depends on the maximum magnet voltage 112. It can be seen from Fig. 7a that at the beginning of charging at 20000 seconds the maximum magnet voltage Vₗᵢₘ is set from 0,2 Volt to 2 Volt and then at 30000 seconds set back again to 0,2 Volt. This maximum magnet voltage curve is due to the fact that at start of loading the superconducting magnet 12 there is no risk of a quench for the superconducting magnet 12. So loading can be done fast. Therefore, at the beginning of charging the maximum magnet voltage Vₗᵢₘ is set to 2 volt. After 60% to 75%, here 66%, of the desired/maximum current I_{magnet} (Fig. 7d) running through the superconducting magnet 12 has built up, the superconducting magnet 12 gets very sensitive for quenches. Thus, the voltage Vₗᵢₘ is taken down to 0,2 volt. Correspondingly, before the end of discharging the maximum magnet voltage Vₗᵢₘ is set from 0,2 Volt to 2 Volt at 170000 seconds and set back to 0,2 volt at the end of discharging at 180000 seconds.

In Fig. 7b the voltages U_{out1'} (dashed line), U_{out2'} (dotted line) (y-axis) are plotted over the time (x-axis). It can be seen from Fig. 7b that at the beginning of charging at 20000 seconds the voltage U_{out1'} rises from 0,1 Volt to 2,1 Volt, falls at 30000 seconds from 2,1 Volt to 0,3 Volt and falls again at 80000 seconds from 0,3 Volt to 0,1 Volt. Furthermore, at the beginning of discharging at 120000 seconds the voltage U_{out2'} rises from 0,1 Volt to 0,3 Volt and rises at 170000 seconds from 0,3 Volt to 2,1 Volt. At 180000 seconds at the end of discharging the voltage at the second load point falls from 2,1 Volt to 0,1 Volt.

In Fig. 7c the common mode voltage value CM (y-axis) is plotted over the time (x-axis). Derived from the voltages U_{out1'}, U_{out2'} of Fig. 7b, the common mode voltage value CM in Fig. 7c at the beginning of charging at 20000 seconds rises from 0,1 Volt to 1,1 Volt, falls at 30000 seconds from 1,1 Volt to 0,2 Volt and falls again at 80000 seconds from 0,2 Volt to 0,1 Volt. Moreover, at the beginning of discharging at 120000 seconds the common mode voltage value CM rises from 0,1 Volt to 0,2 Volt and rises again at 170000 seconds from 0,2 Volt to 1,1 Volt. At 180000 seconds at the end of discharging the voltage common mode value CM falls from 1,1 Volt to 0,1 Volt. Note that all CM values were here at about 9% at maximum as compared to Uᵢₙ (of here 12V); note that in accordance with the invention, typically CM≤25% or CM≤20% (case A) or CM≥75% or CM≥80% (case B) are preferred.

In Fig. 7d the differential mode voltage value DM (dashed line) and the current I_{magnet} running through the superconducting magnet 12 (solid line) (y-axis) are plotted over time (x-axis). Derived from the voltages U_{out1'}, U_{out2'} of Fig. 7b, the differential mode voltage value DM in Fig. 7d at the beginning of charging at 20000 seconds rises from 0 Volt to 2 Volt for fast charging from there on, falls at 30000 seconds from 2 Volt to 0,2 Volt for slowly charging from thereon and falls again at 80000 seconds from 0,2 Volt to 0 Volt, so charging is stopped. Additionally, at the beginning of discharging at 120000 seconds the differential mode voltage value DM falls from 0 Volt to -0,2 Volt for slowly discharging from thereon and falls again at 170000 seconds from -0,2 Volt to -2 Volt for fast discharging from there on. At 180000 seconds at the end of discharging the differential mode voltage value DM rises from -2 Volt to 0 Volt. During charging the current I_{magnet} running through the superconducting magnet 12 rises fast from 0 ampere at 20000 seconds to 200 ampere at 30000 seconds and rises further but more slowly from 200 ampere at 30000 seconds to 300 ampere at 80000 seconds. During discharging the current falls slowly from 300 ampere at 120000 seconds to 200 ampere at 170000 seconds and then falls further and faster to 0 ampere at 180000 seconds. Note here that all DM values obeyed to here about |DM|≤9% at all times, as compared to Uᵢₙ; note that typically |DM|≤25% or |DM|≤20%.

In summary, a charging and discharging device 10 for a superconducting magnet 12 is disclosed, having at least one circuit block 14, with each circuit block 14 having a first and a second synchronous half bridge converter 16, 18, wherein for each such converter 16, 18 there is allocated a control signal generator 48 for outputting a control signal for driving a switch 20 of the respective converter 16, 18 to open and close and for outputting a further control signal for driving a further switch 22 of this converter 16, 18 to open and close, wherein the control signal applies a duty cycle D₁, D₂ and the further control signal applies an inversion of said duty cycle D₁, D₂, so that the switch 20 is open when the further switch 22 is closed and vice versa, in particular wherein each such converter 16, 18 comprises its own control signal generator 48, wherein in each circuit block 14, the duty cycle D₁ of the control signal of the first converter 16, further referred to as first duty cycle D₁, and the duty cycle D₂ of the control signal of the second converter 18, further referred to as second duty cycle D₂, differ from each other, so that when applying a common input voltage Uᵢₙ between an input point 28 and an base point 32 at both converters 16, 18, a first output voltage Uₒᵤₜ₁ present between a connecting point 40 and a base point 32 of the first converter 16 and a second output voltage Uₒᵤₜ₂ between a connecting point 40 and a base point 32 of the second converter 18 differ from each other, and wherein the first duty cycle D₁ and the second duty cycle D₂ in a case A) both are at most 25%, or in a case B) both are at least 75%. The charging and discharging device is simple and inexpensive in design and to control.

### List of Reference Signs

- 10: charging and discharging device
- 12: superconducting magnet
- 14: circuit block
- 16: first synchronous half bridge converter
- 18: second synchronous half bridge converter
- 20: switch
- 22: further switch
- 24: MOSFET
- 26: further MOSFET
- 28: input point
- 30: converging point
- 32: base point
- 34: input capacitance
- 36: filter capacitance
- 38: filter inductance
- 40: connecting point
- 42: decoupling inductance
- 44: decoupling capacitance
- 46: further connecting point
- 48: control signal generator
- 50: control signal
- 52: further control signal
- 54: first operational amplifier
- 56: first capacitance
- 58: first resistance
- 60: feedback line
- 62: second resistance
- 64: analogous voltage signal
- 65: further analogous voltage signal
- 66: analog to PWM signal converter
- 68: second operational amplifier
- 70: triwave signal
- 71: further triwave signal
- 72: control signal connection
- 74: gate driver
- 76: further control signal connection
- 78: further gate driver
- 83: ground
- 84: first output transition point
- 86: second output transition point
- 88: first load point
- 90: first loading connection
- 92: second load point
- 94: second loading connection
- 95: resistance
- DM: differential mode voltage value
- CM: common mode voltage value
- 96: control unit
- 102: first electrical component arrangement
- 104: second electrical component arrangement
- 106: third electrical component arrangement
- 108: fourth electrical component arrangement
- Vlim: adjusted maximum magnet voltage
- TCM: target common mode voltage value
- 112: maximum magnet voltage
- 114: third resistance
- 116: first setting input
- 118: third operational amplifier
- 120: fourth resistance
- 122: fifth resistance
- 123: voltage source
- 124: sixth resistance
- 126: fourth operational amplifier
- 128: seventh resistance
- 130: eighth resistance
- 131: further voltage source
- 132: ninth resistance
- 134: second potential measurement line
- 136: fifth operational amplifier
- 138: tenth resistance
- 140: eleventh resistance
- 142: first potential measurement line
- 144: twelfth resistance
- 146: thirteenth resistance
- 148: sixth operational amplifier
- 150: second capacitance
- 152: fourteenth resistance
- 154: first diode
- 155: other end of the first diode
- 156: fifteenth resistance
- 158: seventh operational amplifier
- 160: sixteenth resistance
- 162: seventeenth resistance
- 164: eighteenth resistance
- 166: eighth operational amplifier
- 168: third capacitance
- 170: nineteenth resistance
- 172: twentieth resistance
- 174: second diode
- 175: other end of the second diode
- 176: ninth operational amplifier
- TDM: target differential mode value
- 178: current target
- 180: second setting input
- 182: fourth capacitance
- 184: twenty-first resistance
- 186: twenty-second resistance
- 188: signal output
- 190: current measurement device
- 192: current measurement line
- 194: tenth operational amplifier (here: current sense amplifier)
- 196: twenty-third resistance
- 198: twenty-fourth resistance
- 200: eleventh operational amplifier
- 202: twelfth operational amplifier
- 204: twenty-fifth resistance
- 206: twenty-sixth resistance

## Claims

1. A charging and discharging device (10) for a superconducting magnet (12),
having at least one circuit block (14), with each circuit block (14) having a first and a second synchronous half bridge converter (16, 18),
wherein each converter (16, 18) comprises
- a series connection of a switch (20) and a further switch (22) connected between an input point (28) and a base point (32), wherein the switch (20) and the further switch (22) are connected at a converging point (30),
- a series connection of a filter inductance (38) and a filter capacitance (36), wherein the filter inductance (38) and the filter capacitance (36) are connected at a connecting point (40), and wherein the filter inductance (38) is connected to the converging point (30), and the filter capacitance (36) is connected to the base point (32),
and wherein for each such converter (16, 18) there is allocated
- a control signal generator (48) for outputting a control signal for driving the switch (20) to open and close and for outputting a further control signal for driving the further switch (22) to open and close, wherein the control signal applies a duty cycle (D₁, D₂) and the further control signal applies an inversion of said duty cycle (D₁, D₂), so that the switch (20) is open when the further switch (22) is closed and vice versa, in particular wherein each such converter (16, 18) comprises its own control signal generator (48),
wherein in each circuit block (14), the duty cycle D₁ of the control signal of the first converter (16), further referred to as first duty cycle D₁, and the duty cycle D₂ of the control signal of the second converter (18), further referred to as second duty cycle D₂, differ from each other, so that when applying a common input voltage Uᵢₙ between the input point (28) and the base point (32) at both converters (16, 18), a first output voltage Uₒᵤₜ₁ present between the connecting point (40) and the base point (32) of the first converter (16) and a second output voltage Uₒᵤₜ₂ between the connecting point (40) and the base point (32) of the second converter (18) differ from each other, and wherein the first duty cycle D₁ and the second duty cycle D₂ in a case A) both are at most 25%, or in a case B) both are at least 75%.

2. The charging and discharging (10) device according to claim 1, **characterized in**
**that** a first transition point (84) is provided, to which the connection point (40) of each first converter (16) of each circuit block (14) is connected directly or indirectly, and a second transition point (86) is provided, to which the connecting point (40) of each second converter (18) of each circuit block (14) is connected directly or indirectly,
**that** a first load point (88) is provided for connecting a first end of the superconducting magnet (12), and a second load point (92) is provided for connecting a second end of the superconducting magnet (12),
and **that** the first transition point (84) is connected to the first load point (88) via a first loading connection (90), and the second transition point (86) is connected to the second load point (92) via a second loading connection (94).

3. The charging and discharging device (10) according to claim 1 or 2, **characterized in**
**that** the charging and discharging device (10) further comprises a control unit (96) which provides a first generator control signal for the control signal generator (48) of each first converter (16) of each circuit block (14), and a second generator control signal for the control signal generator (48) of each second converter (18) of each circuit block (14).

4. The charging and discharging device (10) according to claim 2 and further according to claim 3, **characterized in**
**that** a current measurement device (190) is included in the first loading connection (90) or the second loading connection (94),
and **that** a signal output (188) of the current measurement device (190) is connected to the control unit (96) with a current measurement line (192).

5. The charging and discharging device (10) according to claim 4, **characterized in that** the control unit (96) is configured to provide the generator control signals depending on progress of charging and discharging the superconducting magnet (12), wherein the progress of charging and discharging the superconducting magnet (12) is monitored by the current measuring device (190).

6. The charging and discharging device (10) according to claim 4 or 5, **characterized in**
**that** a first potential measurement line (142) connects the first load point (88) with the control unit (96), and a second potential measurement line (134) connects the second load point (92) with the control unit (96), that the control unit (96) has a first setting input (116) for setting a maximum magnet voltage (112) to be applied to the superconducting magnet (12) and a second setting input (180) for setting a current target (178) of the superconducting magnet (12),
and **that** the control unit (96) is configured to generate the first generator control signal and the second generator control signal taking into account
- the set current target (178),
- the set maximum magnet voltage (112),
- a signal from the current measurement line (192) indicating the electric current (I_{magnet}) currently running in the superconducting magnet (12), and
- signals from the first potential measurement line (142) and the second potential measurement line (134) indicating the voltage DM currently applied at the superconducting magnet (12).

7. The charging and discharging device (10) according to one of the claims 3 through 6, **characterized in**
**that** a common mode value CM is defined with CM=(Uout1+Uout2)/2,
and **that** the control unit (96) is configured to provide the first generator control signal and the second generator control signal such that during charging and discharging the superconducting magnet (12) with the charging and discharging device (10), the common mode value CM changes over time.

8. The charging and discharging device (10) according to one of the claims claim 3 through 7, **characterized in**
**that** a differential mode value DM is defined with DM=Uout1-Uout2,
and **that** the control unit (96) is configured to provide the first generator control signal and the second generator control signal such that during charging and discharging the superconducting magnet (12) with the charging and discharging device (10), the differential mode value DM changes over time.

9. The charging and discharging device (10) according to one of the claims 3 through 8, **characterized in**
**that** a differential mode value DM is defined with DM=Uout1-Uout2,
and **that** the control unit (96) is configured to provide the first generator control signal and the second generator control signal such that during charging and discharging the superconducting magnet (12) with the charging and discharging device (10), with respect to the absolute value of the differential mode value |DM| there applies
|DM|≤0.25*|Uin|, preferably |DM|≤0.20*|Uin|.

10. The charging and discharging device (10) according to one of the preceding claims, **characterized in**
**that** the charging and discharging device (10) comprises a plurality of circuit blocks (14),
and **that** all input points (28) of all converters (16, 18) of all circuit blocks (14) are connected to a common input stage, and all base points (32) of all converters (16, 18) of all circuit blocks (14) are connected to a common base stage.

11. The charging and discharging device (10) according to one of the preceding claims, **characterized in**
**that** each such converter (16, 18) comprises its own control signal generator (48),
and **that** each converter (16, 18) comprises a feedback line (60) connected to the connecting point (40) and the control signal generator (48), and the control signal generator (48) is configured to determine the duty cycle D₁, D₂ of its control signal taking into account a feedback signal received via the feedback line (60).

12. The charging and discharging device (10) according to one of the preceding claims, **characterized in**
**that** each converter (16, 18) further comprises a series connection of a decoupling inductance (42) and a decoupling capacitance (44), wherein the decoupling inductance (42) and the decoupling capacitance (44) are connected at a further connecting point (46), and wherein the decoupling
inductance (42) is connected to the connecting point (40), and the decoupling capacitance (44) is connected to the base point (32),
in particular wherein the further connecting point (46) of each first converter (16) of each circuit block (14) is connected to a first transition point (84) and the further connecting point (46) of each second converter (18) of each circuit block (14) is connected to a second transition point (86).

13. Use of a charging and discharging device (10) according to one of the claims 1 through 12, for charging or discharging a superconducting magnet (12),
wherein the common input voltage Uᵢₙ is supplied between the input point (28) and the base point (32) of each converter (16, 18) of each circuit block (14), such that the first output voltage Uₒᵤₜ₁ is generated between the connecting point (40) and the base point (32) of each first converter (16) of each circuit block (14), and the second output voltage Uₒᵤₜ₂ is generated between the connecting point (40) and the base point (32) of each second converter (18) of each circuit block (14),
and wherein the superconducting magnet (12) is connected to the charging and discharging device (10) such that a difference DM of the voltages Uₒᵤₜ₁ and Uₒᵤₜ₂ effectively charges the superconducting magnet (12), in particular wherein the charging and discharging device (10) is configured according to claim 2 and the superconducting magnet (12) is connected between the first load point (88) and the second load point (92).

14. A method of charging a superconducting magnet (12),
in particular using a charging and discharging device (10) according to one of the claims 1 through 12,
comprising:
- Generating from a common input voltage Uᵢₙ a first output voltage Uₒᵤₜ₁ with at least one first synchronous half bridge converter (16), wherein a first duty cycle D₁ is applied,
- Generating from said common input voltage Uᵢₙ a second output voltage Uₒᵤₜ₂ with at least one second synchronous half bridge converter (18), wherein a second duty cycle D₂ is applied,
- Choosing D₁ and D₂ differently, such that Uₒᵤₜ₁ and Uₒᵤₜ₂ are different from each other,
- Choosing D₁ and D₂ in a case A) with D₁ and D₂ both at most 25% or in a case B) with D₁ and D₂ both at least 75%,
- Applying Uₒᵤₜ₁ and Uₒᵤₜ₂ to the superconducting magnet (12) such that the superconducting magnet (12) is effectively charged by a difference DM of Uₒᵤₜ₁ and Uₒᵤₜ₂, in particular wherein Uₒᵤₜ₁ and Uₒᵤₜ₂ are applied to different ends of the superconducting magnet (12).

15. The method according to claim 14, **characterized in that** a common mode value CM is defined with CM=(Uout1+Uout2)/2, and that during charging the superconducting magnet (12), the common mode value CM is changed over time,
in particular wherein the common mode value CM is reduced over time in case A), or is increased over time in case B), in particular depending on a measured progress of charging.

16. A method of discharging a superconducting magnet (12),
in particular using a charging and discharging device (10) according to one of the claims 1 through 12,
comprising:
- Generating from a common input voltage Uᵢₙ a first output voltage Uₒᵤₜ₁ with at least one first synchronous half bridge converter (16), wherein a first duty cycle D₁ is applied,
- Generating from said common input voltage Uᵢₙ a second output voltage Uₒᵤₜ₂ with at least one second synchronous half bridge converter (18), wherein a second duty cycle D₂ is applied,
- Choosing D₁ and D₂ differently, such that Uₒᵤₜ₁ and Uₒᵤₜ₂ are different from each other,
- Choosing D₁ and D₂ in a case A) with D₁ and D₂ both at most 25% or in a case B) with D₁ and D₂ both at least 75%,
- Applying Uₒᵤₜ₁ and Uₒᵤₜ₂ to the superconducting magnet (12) such that the superconducting magnet (12) is effectively discharged by a difference DM of Uₒᵤₜ₁ and Uₒᵤₜ₂, in particular wherein Uₒᵤₜ₁ and Uₒᵤₜ₂ are applied to different ends of the superconducting magnet (12).

17. The method according to claim 16, **characterized in that** a common mode value CM is defined with CM=(Uout1+Uout2)/2, and that during discharging the superconducting magnet (12), the common mode value CM is changed over time,
in particular the common mode value CM is increased over time in case A), or is reduced over time in case B), in particular depending on a measured progress of discharging.
